Europäisches Patentamt

European Patent Office

Office européen des brevets

(19)

(11) Veröffentlichungsnummer: **0 374 632**
**A2**

## (12) EUROPÄISCHE PATENTANMELDUNG

(21) Anmeldenummer: 89122666.4

(22) Anmeldetag: 08.12.89

(51) Int. Cl.5: **B32B 27/32**

(30) Priorität: 21.12.88 DE 3842948

(43) Veröffentlichungstag der Anmeldung:
27.06.90 Patentblatt 90/26

(84) Benannte Vertragsstaaten:
**AT BE CH DE ES FR GB IT LI LU NL SE**

(71) Anmelder: **Wolff Walsrode Aktiengesellschaft**
**Postfach**
**D-3030 Walsrode 1(DE)**

(72) Erfinder: **Schinkel, Ingo, Dipl.-Ing.**
**Witternstrasse 14**
**D-3030 Walsrode(DE)**
Erfinder: **Reiners, Urlich, Dr.**
**Finkenstrasse 2**
**D-3044 Neuenkirchen(DE)**

(74) Vertreter: **Zobel, Manfred, Dr. et al**
**c/o BAYER AG Konzernverwaltung RP**
**Patente Konzern**
**D-5090 Leverkusen 1 Bayerwerk(DE)**

(54) **Heisskaschierbare, gasdichte Mehrschichtfolien.**

(57) Verbesserte heißkaschierbare Mehrschichtfolien enthalten eine Polypropylenbasisschicht eine heißkaschierbare Schicht mit einem Ethylenvinylacetat-Copolymeren und einem Ethylenethylacrylat- oder Ethylenacrylsäure-Copolymer, wobei eine Schicht der Folie eine Gassperrschicht ist.

EP 0 374 632 A2

## Heißkaschierbare, gasdichte Mehrschichtfolien

Die vorliegende Erfindung betrifft heißkaschierbare, gasdichte Mehrschichtfolien.

Mehrschichtfolien aus Polyolefinen, die eine gereckte Polypropylenbasisschicht besitzen und mit verschiedenen heißklebefähigen Stoffen, z.B. Polyethylen, Ethylenvinylacetat oder Ionomeren beschichtet sind, sind z.B. bekannt aus den japanischen Offenlegungsschriften 60-109834, 53-4082, US-A-4 629 657 und EP-A-0 263 882. Die bekannten Mehrschichtfolien weisen diverse Nachteile auf, z.B. mangelnde Verbundhaftung, Rollneigung des kaschierten Produktes, unbefriedigende optische Eigenschaften sowie Probleme bei der Weiterverarbeitung, insbesondere durch Prägung.

Mehrschichtfolien aus Polyolefinen, die eine biaxial gereckte Polypropylenbasisschicht besitzen und nachträglich mit heißkaschierbaren Stoffen wie z.B. Polyethylen, Ethylenvinylacetat oder Ionomeren beschichtet sind, sind bekannt. Mehrschichtige gasdichte Polypropylenfolien sind ebenfalls bekannt. Eine Kombination derartiger Fo lien ist deshalb unbekannt und erscheint nicht durchführbar, weil bislang keine geeigneten Rezepturen verbunden mit einer geeigneten Verfahrenstechnologie existieren, die eine hinreichende Gassperre und Haftvermittlungseigenschaften aufweisen.

Aufgabe der Erfindung war es, eine heißkaschierbare Folie mit einer Gassperrschicht bereitzustellen. Insbesondere sollte diese Folie geeignet sein für eine Verbundfolienherstellung ohne Zusatz von weiteren Klebstoffen.

Gegenstand der Erfindung ist eine heißkaschierbare, mindestens monoaxial orientierte Mehrschichtfolie mit einer Basisschicht I, die im wesentlichen aus Polypropylen besteht, und wenigstens einer durch Wärmezufuhr heißkaschierbaren Schicht II mit copolymerisierten Ethyleneinheiten, dadurch gekennzeichnet,

a) daß die Schicht II enthält eine Mischung A aus einem Ethylenvinylacetat-Copolymer A1) und wenigstens einem Copolymer A2) ausgewählt aus der Gruppe

A2.1) Ethylenethylacrylat-Copolymer und
A2.2) Ethylen-Acrylsäure-Copolymer und

b) daß die Folie eine Gassperrschicht aufweist.

Zusätzlich kann die Schicht II Poly-1-buten enthalten.

In einer bevorzugten Ausführungsform besteht die Basisschicht I im wesentlichen oder vollständig aus einem Polypropylen. Vorzugsweise wird ein isotaktisches Polypropylen mit einer Dichte von 0,9 bis 0,91 g/cm³ und einem Schmelzflußindex von 1 bis 4 g/10 Min. bei 230° C/21,6 N (nach DIN 53 735) verwendet.

In einer bevorzugten Ausführungsform enthält die Mischung A für die heißkaschierbare Schicht II: 50 - 95 Gew.-Teile, vorzugsweise 65 - 95 Gew.-Teile des Ethylenvinylacetat-Copolymeren A1),

10 - 50 Gew.-Teile, insbesondere 10 - 35 Gew.-Teile des Ethylen-Ethylacrylat-Copolymeren A2. 1) und/oder

5 - 35 Gew.-Teile, vorzugsweise 8 - 20 Gew.-Teile des Ethylen-Acrylsäure-Copolymeren A2.2) und gegebenenfalls

5 - 20 Gew.-Teile eines Polybutens A2.3), insbesondere Polybuten-1.

In einer besonders bevorzugten Ausführungsform besteht die heißkaschierbare Schicht II, abgesehen von möglicherweise vorhandenen üblichen Additiven, aus den angegebenen Copolymeren A), A2.1), A2.2) und gegebenenfalls A2.3), wobei es sich dann bei den angegebenen Gewichtsteilen um Gewichtsprozente handelt.

Das Ethylenvinylacetat-Copolymer A1) enthält in einer bevorzugten Ausführungsform 70 bis 95, insbesondere 75 bis 95 Gew.-% polymerisierte Ethyleneinheiten, wobei in einer besonders bevorzugten Ausführungsform der restliche Anteil im wesentlichen oder vollständig aus polymerisiertem Vinylacetat besteht.

Das Ethylen-Ethylacrylat-Copolymer A2. 1) enthält in einer bevorzugten Ausführungsform im wesentlichen polymerisierte Ethyleneinheiten insbesondere wenigstens 88 Gew.-% polymerisierte Ethyleneinheiten, insbesondere 88 bis 92 Gew.-% polymerisierte Polyethyleneinheiten, wobei die restlichen Anteile im wesentlichen oder vollständig aus polymerisiertem Ethylacrylat bestehen.

Das Ethylen-Acrylsäure-Copolymer A2.2) besteht in einer bevorzugten Ausführungsform im wesentlichen aus polymerisierten Ethyleneinheiten, insbesondere wenigstens 85 Gew.-% polymerisierten Ethyleneinheiten, besonders bevorzugt zu 85 bis 95 Gew.-% aus polymerisierten Ethyleneinheiten, wobei die restlichen Anteile im wesentlichen oder vollständig aus polymerisierter Acrylsäure bestehen.

Das Polybuten A2.3) besteht vorzugsweise im wesentlichen oder vollständig aus polymerisiertem Buten-1.

Die Basisschicht I kann 3 bis 15 Gew.-%, vorzugsweise 8 bis 12 Gew.-% mit dem Polypropylen unverträgliche Additive, vorzugsweise anorganische Additive wie Kalciumcarbonat, Siliciumdioxid, Natriumaluminiumsilikat und/oder Titandioxid enthalten, wodurch eine Opakisierung der Folie erreicht werden kann. Es kann aber auch ein organisches, unverträgliches Additiv fein verteilt in der Basisschicht enthalten sein, vorzugsweise Teilchen aus Polystyrol, Polymethylmethacrylat, Polytetrafluorethylen und/oder Copolymeren dieser Verbindungen. Unverträglichkeit bedeutet dabei, daß diese Polymere eine separate Phase bilden. Sie können einen anderen Schmelzpunkt und insbesondere einen anderen Elastizitätsmodul als das Polypropylen aufweisen. Beim Orientierungsprozeß der Mehrschichtfolie kommt es deshalb bei Anwesenheit derartiger Additive zum Aufreißen der Polymermatrix und damit zu einer Vakuolenbildung.

Das Ethylenvinylacetat-Copolymer A1) hat vorzugsweise einen Schmelzflußindex von 0,1 bis 15 g/10 Min. bei 230° C und 21,6 N (DIN 53 735), besonders bevorzugt von 0,3 bis 8 g/10 Min. bei 230° C und 21,6 N.

Die Copolymere A2. 1) und A2.2) haben vorzugsweise einen Schmelzflußindex von 0,5 bis 5 g/10 Min. bei 230° C und 21,6 N.

Copolymer A2.3) hat vorzugsweise einen Schmelzflußindex von 0,2 bis 8 g/10 Min. bei 230° C und 21,6 N.

In einer bevorzugten Ausführungsform ist die heißkaschierbare Schicht II gleichzeitig eine Gassperrschicht. In einer anderen bevorzugten Ausführungsform ist eine zusätzliche Schicht III enthalten, die als Gassperrschicht wirkt.

Als wirksames Gassperrschichtmaterial B) in der Gassperrschicht werden bevorzugt Polyacrylnitril, Polyvinylidenchlorid und insbesondere verseifte Ethylenvinylacetat-Copolymerisate, die, bezogen auf das Copolymerisat, vorzugsweise 50 bis 20, insbesondere 40 bis 25 Gew.-% Ethyleneinheiten aufweisen, wobei die Vinylacetateinheiten zu vorzugsweise mindestens 90 %, insbesondere zu mehr als 95 %, verseift sind, enthält. Die Grenzviskosität des Gassperrschichtmaterials B), gemessen in einer Lösungsmittelmischung aus 85 Gew.-% Phenol und 15 Gew.-% Wasser, liegt vorzugsweise zwischen 0,07 und 0,17 $g^{-1}$, besonders bevorzugt zwischen 0,09 und 0,15 $g^{-1}$.

In einer weiteren bevorzugten Ausführungsform werden zusätzlich Haftvermittler C) in einer Schicht der erfindungsgemäßen Folie eingesetzt. Der Haftvermittler kann in einer separaten Haftvermittlerschicht IV oder in einer anderen Schicht enthalten sein. Als Haftvermittler C) werden vorzugsweise modifizierte Polyolefine eingesetzt. Insbesondere sind dies Polyolefine mit Carboxylgruppen wie z.B. Polypropylen oder Polyethylen, die mit mindestens einem Monomer aus der Gruppe oder $\alpha,\beta$-einfach ungesättigten Dicarbonsäuren wie z.B. Maleinsäure, Fumarsäure, Itaconsäure oder deren Säureanhydride, Säureester, Säureamide und Säureimide gepfropft sind, Copolymerisate von Ethylen mit $\alpha,\beta$-einfach ungesättigten Carbonsäuren, wie Acrylsäure, Methacrylsäure und/oder deren Metallsalze (Zn, Na) und/oder deren Alkyl($C_1$-$C_4$)Estern oder entsprechende Pfropfpolymere auf Polyolefinen wie Polyethylen oder Polypropylen oder bereits beschriebene verseifte Mischpolymerisate, die mit einem Monomer oder den o.a. ungesättigten Säuren pfropfpolymerisiert sind.

Besonders bevorzugt sind Polyolefine wie Propylen oder Copolymerisate von Propylen und Ethylen, mit maximal 1,0 Gew.-% aufgepfropftem, $\alpha,\beta$-einfach ungesättigtem Dicarbonsäureanhydrid wie Maleinsäureanhydrid oder deren verseifte Mischpolymerisate.

In einer weiteren bevorzugten Ausführungsform enthält die erfindungsgemäße Folie eine Siegelschicht V.

Die Siegelschicht enthält vorzugsweise ein Ethylenhomo-oder -Copolymerisat, wobei vorzugsweise ein Polyethylen hoher Dichte oder statistisches Ethylen/Propylen-Copolymeres mit wenigstens 3 Gew.-% Ethylen, vorzugsweise 94 bis 96, besonders bevorzugt 95 Gew.-% Propylen und 4 bis 6, besonders bevorzugt 5 Gew.-% Ethylen, eingesetzt wird.

Die Dichte des Siegelschichtpolymeren sollte vorzugsweise im Bereich von 0,895 bis 0,960 $g/cm^3$ und einen Schmelzflußindex von 1 bis 7 g/10 Min bei 230° C/2,16 $N/cm^2$ Druck und einen Kristallitschmelzpunkt je nach Typ im Bereich von 125 bis 148° C (unter Polarisationsmikroskop) aufweisen.

Die Folie besteht aus mindestens zwei Schichten, einer Heißklebeschicht, die gassperrende Wirkung besitzt, sowie einer Polypropylen-Basisschicht. Sie kann aber auch, abhängig vom gewünschten Grad der Gassperreigenschaft, aus mehr Schichten bestehen, z.B. einer Heißklebeschicht, einer Gasbarrierschicht, einer haftvermittelnden Schicht sowie der Polypropylen-Basisschicht.

Im folgenden werden bevorzugte Schichtaufbauten angegeben:

Zwei-Schicht-Aufbau:

I Basisschicht, vorzugsweise zu 100 Gew.-% aus Polypropylen.

II Heißkaschierbare Schicht mit Gassperrwirkung.

Die Schicht II enthält vorzugsweise die oben angegebenen Polymere A), B), C), wobei insbesondere auf 100 Gew.-Teile A) 50 bis 100 Gew.-Teile B) und 0 bis 50 Gew.-Teile C) entfallen.

Drei-Schicht-Aufbau:

Der Aufbau besteht aus folgender Schichtenfolge: I, III, II

I Polypropylenbasisschicht

Die Polypropylenbasisschicht besteht entweder aus Polypropylen oder enthält eine Mischung aus Polypropylen und den oben angegebenen Polymeren A) und C), wobei vorzugsweise auf 100 Gew.-Teile Propylen 0 bis 5 Gew.-Teile A) und 0 bis 5 Gew.-Teile C) entfallen.

III Gasbarriereschicht

Die Gasbarriereschicht besteht in einer bevorzugten Ausführungsform aus einer Mischung der oben angegebenen Polymeren A), B) und C), wobei insbesondere auf 100 Gew.-Teile B) 0 bis 40 Gew.-Teile A) und 0 bis 30 Gew.-Teile C) entfallen.

II Heißklebeschicht

Die Heißklebeschicht besteht in einer bevorzugten Ausführungsform aus einer Mischung der Polymeren A), B), C), wobei insbesondere auf 100 Gew.-Teile A) 0 bis 30 Gew.-Teile B) und 0 bis 50 Gew.-Teile C) entfallen.

Vier-Schicht-Aufbau

Der Vier-Schicht-Aufbau besteht aus folgender Schichtenfolge: I, IV, III, II

I Basisschicht

Die Basisschicht besteht entweder aus reinem Polypropylen oder enthält auf 100 Gew.-Teile Polypropylen 0 bis 5 Gew.-Teile des Haftvermittlers C).

IV Haftvermittlerschicht

Die Haftvermittlerschicht besteht in einer bevorzugten Ausführungsform aus dem Haftvermittler C) oder aus einer Mischung mit den oben angegebenen Polymeren B), wobei auf 100 Gew.-Teile Haftvermittler C) vorzugsweise 0 bis 5 Gew.-Teile B) entfallen.

III Gassperrschicht

Die Gassperrschicht besteht vorzugsweise entweder ausschließlich aus dem Gassperrschichtmaterial B) oder aus einer Mischung von B) mit dem Haftvermittler C), wobei vorzugsweise auf 100 Gew.-Teile B) 0 bis 5 Gew.-Teile C) entfallen.

II Heißklebeschicht

Die Heißklebeschicht enthält eine Mischung der Polymeren A) und B), wobei vorzugsweise auf 100 Gew.-Teile A) 0 bis 10 Gew.-Teile B) entfallen.

Die Ausrüstung der Schichten der erfindungsgemäßen Mehrschichtfolien mit üblichen Additiven und Hilfsmitteln wie z.B. Gleitmitteln, Antiblockmitteln und Antistatika in üblichen Mengen, ist möglich.

Die erfindungsgemäßen Mehrschichtfolien können nach üblichen Verfahren wie Laminierung, Beschichtung oder Schmelz(co)extrusion produziert werden, wobei das Heißklebeschichtmaterial vorzugsweise durch direkte Compoundierung hergestellt werden kann.

Die Mehrschichtfolie kann in den einzelnen Schichten die üblichen Additive und Hilfsmittel, wie z.B. Gleitmittel, Antiblockiermittel und Antistatika in üblichen Mengen, enthalten, s. z.B. EP-A-0 027 586 und EP-A-0 263 882 und die jeweils angegebene Literatur.

Die erfindungsgemäßen Mehrschichtfolien können nach üblichen Verfahren wie Laminierung, Beschichtung, Extrusionsbeschichtung, Schmelzextrusion oder Schmelzcoextrusion produziert werden. In einer besonders bevorzugten Ausführungsform werden die Mehrschichtfolien nicht nur einmal sondern biaxial gereckt. In einer bevorzugten Ausführungsform wird die Basisschicht I extrudiert und in einer Richtung gereckt, wobei anschließend an die Reckung eine Laminierung oder Extrusion der heißkaschierbaren Schicht II erfolgt. Anschließend wird die so erhaltene Mehrschichtfolie noch einmal gereckt, vorzugsweise in die Richtung, in der noch keine Reckung vorliegt.

Die einzelnen Bestandteile der heißkaschierbaren Schicht II werden vorzugsweise in einer Verfahrensstufe zusammengegeben, aufgeschmolzen und auf die Basisfolie I aufgetragen.

Die erfindungsgemäßen Mehrschichtfolien werden mindestens monoaxial, bevorzugt biaxial gereckt, wobei die Längsreckung vorzugsweise im Verhältnis 5:1 bis 7:1 und die Querreckung im Verhältnis 7:1 bis 10:1 vorgenommen wird.

In den erfindungsgemäßen Mehrschichtfolien hat die Polypropylenbasisfolie vorzugsweise eine Dicke von 10 bis 50 μm und die heißkaschierbare Schicht vorzugsweise eine Dicke von 4 bis 20 μm, besonders bevorzugt 5 bis 10 μm.

Die erfindungsgemäßen Mehrschichtfolien eignen sich besonders als Hochglanzkaschierfolien zum Herstellen von gasdichten Papier- und Kartonverbunden für Buch- und Prospekteinbände, für Kartonage die auch geprägt und genutet werden können.

Die erfindungsgemäßen Mehrschichtfolien eignen sich besonders als Verbundfolienkomponenten in Verbundfolien für die Verpackung leicht verderblicher Lebensmittel.

Gegenstand der Erfindung ist weiterhin ein Verfahren zur Herstellung einer erfindungsgemäßen Mehrschichtfolie, dadurch gekennzeichnet, daß eine Basisschicht I mit wenigstens einer durch Wärmezufuhr aktivierbaren Schicht II versehen wird.

Gegenstand der Erfindung ist weiterhin ein Verfahren zur Herstellung von Verbunden aus beliebigen Substraten und einer erfindungsgemäßen Folie, dadurch gekennzeichnet, daß man das Substrat und die Folie unter Wärmeeinwirkung und vorzugsweise nur geringem Druck zusammenführt, wobei die Schicht II der erfindungsgemäßen Folie dem Substrat zugewandt ist. Bei den Substraten handelt es sich vorzugsweise um Materialien, die üblicherweise für die Hochglanzkaschierung verwendet werden, wie z.B. Papier, Pappe, Karton, vor allem Folien, insbesondere Kunststoff- oder Metallfolien.

Zur Bestimmung der Verbundhaftung werden die Folien zusammen mit einem schwarzen Karton von 300 g/m² zwischen zwei rotierende Walzen geführt, wobei die der Folie zugewandte Seite auf ca. 100° C geheizt ist und die Walzen mit einem Druck von 130 N/cm bei einer Geschwindigkeit von 3 m/Min zusammengepreßt werden. Anschließend werden Folie und Karton getrennt und die Verbundhaftung mit einer Zugprüfmaschine gemessen. Die Verbundhaftung wird auf einen 15 mm breiten Streifen bezogen.

Die Messung der O$_2$-Durchlässigkeit wird nach DIN 53 380 durchgeführt.

Beispiel

Eine heißkaschierbare Schicht II mit den in folgender Tabelle angegebenen Bestandteilen wird auf eine monoaxial gereckte Basisfolie aus Polypropylen der Dichte 0,905 g/cm³ und dem Schmelzindex von 3,3 g/10 Min. bei 230° C/21,6 N aufgetragen und anschließend gereckt, so daß eine Verbundfolie mit einer Längsreckung im Verhältnis 5:1 und einer Querreckung im Verhältnis 10:1 erhalten wird. Die Basisfolie hat eine Dicke von 15 µm und die heißkaschierbare Schicht eine Dicke von 7 µm.

Die heißkaschierbare Schicht II ist wie folgt zusammengesetzt:
44 % A1 Ethylen-Vinylacetat-Copolymer mit 18 % Vinylacetat Monomergehalt
11 % A2.2 Ethylen-Acrylsäure-Copolymer mit 7 % Acrylsäure-Monomer
37 % B Ethylen-Vinylacetat-Copolymer mit 55 % Vinylacetateinheiten, die zu 96 % verseift sind
8 % C modifiziertes Polypropylen mit einem verseiften Mischpolymerisat mit 0,7 Gew.-% aufgepfropftem Maleinsäureanhydrid
Schichtdicke: Basisschicht Polypropylen I: 20 µm
Heißklebeschicht II: 10 µm
Verbundhaftung: 1,1 N/15 mm
O$_2$-Durchlässigkeit: 49 cm³ /(m² • d • bar)

Die Folie läßt sich ohne Schwierigkeiten in einfacher Weise unter Zufuhr von Wärme und unter Druck gegen andere übliche Folien kaschieren.

## Ansprüche

1. Heißkaschierbare, mindestens monoaxial orientierte Mehrschichtfolie mit einer Basisschicht I, die im wesentlichen aus Polypropylen besteht, und wenigstens einer durch Wärmezufuhr heißkaschierbaren Schicht II mit copolymerisierten Ethyleneinheiten, dadurch gekennzeichnet, daß die Schicht II enthält eine Mischung A aus einem Ethylenvinylacetat-Copolymer A1) und wenigstens einem Copolymer A2) ausgewählt aus der Gruppe
A2.1) Ethylenethylacrylat-Copolymer und
A2.2) Ethylen-Acrylsäure-Copolymer und
daß die Folie eine Gassperrschicht aufweist.

2. Folie nach Anspruch 1, dadurch gekennzeichnet, daß die heißkaschierbare Schicht II die Gassperrschicht ist.

3. Folie nach Anspruch 1, dadurch gekennzeichnet, daß eine zusätzliche Schicht III als Gassperrschicht vorliegt.

4. Folie nach Anspruch 1, dadurch gekennzeichnet, daß die als Gassperrschicht wirkende Schicht ein verseiftes Ethylenvinylacetat mit einem Verseifungsgrad von mindestens 90 % aufweist.

5. Mehrschichtfolie gemäß Anspruch 1, dadurch gekennzeichnet, daß die Schicht II enthält, bezogen auf die Summe der Copolymeren A1), A2.1) und A2.2)
50 bis 95 Gew.-Teile Copolymer A1),
10 bis 50 Gew.-Teile Copolymer A2.1) und/oder
5 bis 35 Gew.-Teile Copolymer A2.2).

6. Folie nach wenigstens einem der vorhergehenden Ansprüche, dadurch gekennzeichnet, daß Copolymer A1) zu wenigstens 70 Gew.-% aus copolymerisierten Ethyleneinheiten besteht,
Copolymer A2.1) zu wenigstens 88 Gew.-% aus copolymerisierten Ethyleneinheiten besteht,
Copolymer A2.2) zu wenigstens 85 Gew.-% aus copolymerisierten Ethyleneinheiten besteht.

7. Folien nach wenigstens einem der vorhergehenden Ansprüche, dadurch gekennzeichnet, daß in der Schicht II zusätzlich ein Polybuten A2.3) enthalten ist.

8. Verfahren zur Herstellung von Verbunden aus beliebigen Substraten und einer Folie, dadurch gekennzeichnet, daß man das Substrat und eine Folie gemäß Anspruch 1 unter Wärme- und Druckeinwirkung zusammenführt, wobei die Schicht II dem Substrat zugewandt ist.

9. Verfahren nach Anspruch 9, dadurch gekennzeichnet, daß das Substrat Papier, Pappe, Folie, Stoffbahn oder Netz ist.